# EUROPÄISCHE PATENTSCHRIFT

(11) **EP 0 400 465 B1**
(45) Veröffentlichungstag und Bekanntmachung des Hinweises auf die Patenterteilung: **12.04.1995**
(21) Anmeldenummer: 90109779.0
(22) Anmeldetag: 23.05.1990
(51) Int. Cl.: C08G 77/60

(54) **Fluorhaltige Polycarbosilane und Verfahren zu deren Herstellung**
Fluorinated polycarbosilanes and process for preparing them
Polycarbosilanes fluorés et leur procédé de préparation

(30) Priorität: 01.06.1989 DE 3917838
(43) Veröffentlichungstag der Anmeldung: 05.12.1990
(73) Patentinhaber: Kali-Chemie Aktiengesellschaft, D-30173 Hannover (DE)
(72) Erfinder: Sartori, Peter, D-4134 Rheinberg 4 (DE); Habel, Wolfgang, D-4000 Düsseldorf 30 (DE); Mayer, Lutz, D-4100 Duisburg 1 (DE)
(74) Vertreter: Lauer, Dieter, Dr.

(56) Entgegenhaltungen:
- EP-A- 0 303 900
- DE-A- 3 616 378
- DE-C- 853 350
- US-A- 4 777 234
- US-A- 4 792 591

## Beschreibung

Die Erfindung bezieht sich auf neue fluorhaltige Polycarbosilane und Verfahren zu deren Herstellung.

Polycarbosilane sind Polymere mit einer Gerüststruktur aus den Elementen Kohlenstoff und Silicium, in denen im allgemeinen Si-Gruppen und Kohlenwasserstoffgruppen alternierend vorliegen. Die Cerüststruktur solcher Polycarbosilane besteht z.B. aus wiederkehrenden Struktureinheiten der Formel 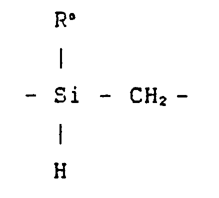
worin R^{o} z.B. einen Kohlenwasserstoff-Substituenten darstellt Nach bekannten Herstellverfahren werden solche Polycarbosilane gewonnen, indem man Monosilane wie z.B. Tetramethylsilan, Trimethylchlorsilan, Dimethyldichlorsilan oder Methyltrichlorsilan durch thermische Zersetzung in Gemische verschiedener Polycarbosilane überführt. Ein anderes bekanntes Verfahren zur Herstellung solcher Polycarbosilane geht von Polysilanen aus, in denen mindestens einer der beiden Substituenten am Siliciumatom eine Methylgruppe ist. Diese Polysilane werden pyrolytisch bei Temperaturen von 350 bis 450 °C in das Polycarbosilan überführt, wobei aus einem Teil der Methylsubstituenten während der thermischen Umwandlung Methylengruppen gebildet werden, die jeweils zwischen benachbarte Si-Atome des Polysilans eingeschoben werden, und wobei ein Wasserstoffatom am Siliciumatom verbleibt. Solche Pyrolysen verlaufen radikalisch.

Aus der US 4 761 458 ist es bereits bekannt, derartige Polycarbosilane, die wenigstens 0,1 Gew.-% SiH-Gruppen tragen durch Umsetzung mit Chlorierungs- oder Bromierungsreagentien in einer radikalischen Reaktion in chlorierte oder bromierte Polycarbosilane zu überführen. Aus den SiH-Gruppen werden hierbei SiCl- oder SiBr-Gruppen gebildet. Die US 4 761 458 setzt als Edukte für die Halogenierungsreaktion gewöhnliche, im Stand der Technik bekannte, mit niedrigen Alkylgruppen substituierte Polycarbosilane der oben beschriebenen Art ein. Diese wurden durch Pyrolyse hergestellt, z.B. von Polydimethylsilan (-(CH₃)₂ Si-)ₙ.

Aus der deutschen Offenlegungsschrift 36 16 378 sind bereits Vorpolymere aus keramikbildenden Elementen für die Herstellung von keramischen polymeren Werkstoffen bekannt, in denen leicht abspaltbare Elemente zum Teil durch schwer abspaltbare Elemente wie Fluor oder vollfluorierte Kohlenwasserstoffverbindungen ersetzt wurden. Als leicht abspaltbares Element wird dort Wasserstoff genannt. Das Ausführungsbeispiel der Offenlegungsschrift geht ebenfalls von einem gewöhnlichen, im Stand der Technik bekannten Polycarbosilan der oben beschriebenen Art aus, welches durch Pyrolyse von Polydimethylsilan (-(CH₃)₂Si-)ₙ hergestellt wurde. Die Einführung von Fluor in dieses Polycarbosilan wird durch Elektrofluorierung mit Tetraethylammoniumfluorid oder durch Direktfluorierung (radikalisch) mit elementarem Fluor bewirkt. Hierbei kommt es neben der Umwandlung von SiH-Gruppen in SiF-Gruppen auch zur Einführung von Fluoratomen in die Methylsubstituenten der Siliciumatome und in die Methylenbrücken des Si-CH₂-Si-Gerüstes des Polycarbosilans.

Für diese im Stand der Technik bekannten, d.h. aus pyrolytisch gewonnenen Polycarbosilan-Edukten durch radikalische Halogenierungsmethoden hergestellten halogenierten Polycarbosilane bestehen hinsichtlich der Produkteigenschaften und der Herstellverfahren eine Reihe von Nachteilen.

Zu einem Teil sind die nachteiligen Eigenschaften der bekannten halogenierten Polycarbosilane insoweit auf die ungünstigen Eigenschaften der pyrolytisch gewonnenen nicht-halogenierten Polycarbosilane zurückzuführen, daß durch deren Einsatz als Edukte im wesentlichen bereits die Grundstruktur und der maximal erreichbare Reinheitsgrad der halogenierten Produkte vorbestimmt wird. So hängt z.B. auch die Einführbarkeit von Halogenatomen in diese Polycarbosilane unmittelbar von den in diesen Polycarbosilanen vorhandenen SiH-Gruppen ab, da diese SiH-Gruppen bei den bekannten Verfahren zur Herstellung halogenierter Polycarbosilane in die SiHal-Gruppen überführt werden (Hal = Halogen). Hierbei ist es jedoch nachteilig, daß sich die Bildung der SiH-Gruppen bei der pyrolytischen Herstellung der Edukt-Polycarbosilane nur schlecht steuern läßt und sich diese Tatsache in der Folge unmittelbar auch auf die Eigenschaften der daraus hergestellten halogenierten Polycarbosilane auswirkt.

Weiterhin bringt auch die Herstellung der bekannten halogenierten Polycarbosilane unter radikalischen Halogenierungsbedingungen Nachteile mit sich. So ist der Halogenierungsgrad und -ort schwer steuerbar. Zwar reagieren zunächst die SiH-Gruppen bevorzugt zu SiHal-Gruppen, doch kommt es in erheblichem Umfange zu Nebenreaktionen, insbesondere bei langen Reaktionszeiten und unter leicht verschärften Reaktionsbedingungen. So treten neben der gewünschten Halogenierung in den SiH-Gruppen auch Halogenierungsreaktionen in den Kohlenwasserstoffsubstituenten (z.B. Bildung von CH₂F, CHF₂- und CF₃- aus Methylsubstituenten) oder in den Methylenbrücken (z.B. Bildung von Si-CHF-Si oder Si-CF₂-Si) des eingesetzten Polycarbosilans auf. Darüber hinaus können die radikalischen Reaktionsbedingungen auch zu Spaltungcreaktionen im Si-C-Si-Gerüst des Polycarbosilans führen, wodurch das eingesetzte Polycarbosilan und/oder das halogenierte Polycarbosilan zum Teil in unerwünschte Bruchstücke oder sogar in mehr oder weniger leicht flüchtige, niedermolekulare Verbindungen abgebaut wird.

Einerseits sind die im Stand der Technik bekannten halogenierten Polycarbosilane somit ebenso wie die zugrundeliegenden nicht-halogenierten Polycarbosilane uneinheitliche Produkte mit unregelmäßigem SiC-Gerüst, die durch mehr oder weniger leicht flüchtige, durch die Herstellung bedingte Zersetzungsprodukte begleitet werden. Andererseits sind weitere Maßnahmen zur Einengung auf ein für die beabsichtigte weitere Verwendung günstigeres Produktspektrum (z.B. Reinigung und/oder Trennung durch fraktionierte Kristallisation bzw. fraktionierte Destillation) arbeits-, energie- und somit auch kostenaufwendig.

Es bestand daher die Aufgabe, neue halogenierte Polycarbosilane zur Verfügung zu stellen, die die Nachteile des Standes der Technik vermeiden, die sich durch günstige Eigenschaften auszeichnen und sich leicht an den jeweiligen Verwendungszweck optimal anpassen lassen. Eine weitere Aufgabe bestand in der Bereitstellung einfacher und gut steuerbarer Verfahren zur Herstellung dieser neuen halogenierten Polycarbosilane.

Die Aufgaben werden gelöst durch die erfindungsgemäßen fluorhaltigen Polycarbosilane und die erfindungsgemäßen Verfahren.

Die Erfindung betrifft fluorhaltige Polycarbosilane auf Basis von Struktureinheiten der allgemeinen Formeln I bzw. I und II 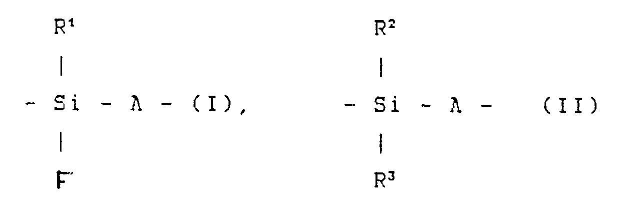
worin
R¹ für Halogen, vorzugsweise Fluor, Chlor oder Brom, Alkyl, Cycloalkyl, Arylalkyl oder Aryl steht, wobei R¹ in verschiedenen Einheiten ein und desselben Polycarbosilans auch unterschiedliche Bedeutung besitzen kann,
R² und R³ unabhängig voneinander für Alkyl, Cycloalkyl, Arylalkyl oder Aryl stehen, wobei R² bzw. R³ in verschiedenen Einheiten ein und desselben Polycarbosilans auch unterschiedliche Bedeutung besitzen können,
A für geradkettige oder verzweigte Alkylen- oder für Cycloalkylen-Reste steht, die gegebenenfalls durch inerte Substituenten weiter substituiert sein können, wobei A in verschiedenen Einheiten ein und desselben Polycarbosilans auch unterschiedliche Bedeutung besitzen kann.

Die Struktureinheiten der Formeln I und II liegen im Polycarbosilan im allgemeinen in einem mittleren Molverhältnis (I:II) von 1:99 bis 1:0 vor, vorzugsweise 1:9 bis 1:0. Die Struktureinheit der Formel I liegt somit in einem Anteil 1 bis 100 Mol-%, vorzugsweise von 10 bis 100 Mol-%, und die Struktureinheit der Formel II in einem Anteil von 0 bis 99 Mol-%, vorzugsweise von 0 bis 90 Mol-%, vor (bezogen auf die Summe von I und II als 100 Mol-% ohne Berücksichtigung des prozentualen molaren Anteils der Endgruppen des Polycarbosilans). Falls Arylsubstituenten in den halogenierten Polycarbosilanen vorliegen so lassen sich diese leicht durch spektroskopische Standardmethoden wie die Infrarotspektroskopie (z.B. aromatische C-H-Streckschwingungen bei etwa 3000-3100 cm⁻¹; z.B. aromatische C-C-Streckschwingungen bei etwa 1400-1500 cm⁻¹) oder die Protonenresonanzspektroskopie (z.B. Resonanzen aromatischer Protonen bei etwa 7-8 ppm) nachweisen.

Die fluorhaltigen Polycarbosilane der vorliegenden Erfindung stellen halogenierte Derivate von solchen Polycarbosilanen dar, die durch ein nicht-pyrolytisches Verfahren hergestellt wurden, wie es z.B. in der deutschen Patentanmeldung 38 41 348 beschrieben ist.

In einer Ausgestaltung der Erfindung bestehen die Polycarbosilane aus einer Anzahl verschiedener, nebeneinander vorliegender Struktureinheiten der allgemeinen Formeln I bzw. I und II. Diese Struktureinheiten können sich in den Resten A und/oder R¹ bzw. den Substituenten R² und/oder R³ unterscheiden. Gewöhnlich stellen die das Polycarbosilan aufbauenden Struktureinheiten der allgemeinen Formeln I bzw. I und II Kombinationen von nicht mehr als maximal sieben unterschiedlich substituierten Si-Einheiten und von nicht mehr als maximal drei unterschiedlichen A-Einheiten dar.

Die Erfindung umfaßt auch gemischt halogenierte Polycarbosilane, das heißt solche Polycarbosilane, in denen insbesondere die Halogenatome Chlor, Brom und Fluor nebeneinander vorliegen können.

Es liegen dann zum Beispiel fluorierte Polycarbosilane auf Basis von Struktureinheiten der allgemeinen Formeln I bzw. I und II vor, worin die Reste A, R¹, R² und R³ in den Strukturelementen der allgemeinen Formeln I bzw. II die obige Bedeutung besitzen.

Eine Untervariante der fluorierten Polycarbosilane zeichnet sich dadurch aus, daß im Strukturelement der Formel I, auch der Substituent R¹ die Bedeutung Halogen besitzt und vorzugsweise für Fluor, Chlor oder Brom steht, wobei die anderen Reste A, R² und R³ in den Strukturelementen der Formeln I bzw. II die obige Bedeutung besitzen.

In einer anderen Untervariante der fluorierten Polycarbosilane zeichnen sich diese dadurch aus, daß in den Strukturelementen der Formel I, R¹ für Alkyl, Cycloalkyl, Arylalkyl und/oder Aryl steht und die anderen Reste A, R² und R³ in den Strukturelementen der Formel I bzw. II die obige Bedeutung besitzen. Es liegen dann fluorierte Polycarbosilane vor, die außer dem Fluoratom keine weiteren Halogenatome enthalten.

Bevorzugt sind hierbei solche fluorierten Polycarbosilane, in denen R¹ für Alkyl und/oder Aryl steht, wobei niederes Alkyl wie Methyl-, Ethyl-, Propyl- oder Butyl-Reste und als Aryl Phenyl-Reste ganz besonders bevorzugt sind.

Neben den rein Fluor-haltigen Polycarbosilanen der vorgenannten Art zeichnen sich die fluorierten Polycarbosilane in einer weiteren Untervariante dadurch aus, daß in den Strukturelementen der Formel I, R¹ die Bedeutung Fluor besitzt und die anderen Reste A, R² und R³ in den Strukturelementen der Formeln I bzw. II die obige Bedeutung besitzen.

In einer weiteren Ausgestaltung der Erfindung liegen fluorhaltige Polycarbosilane vor, bei denen in den Struktureinheiten der Formel II die Substituenten R² und R³ unabhängig voneinander die Bedeutung Alkyl, Cycloalkyl oder Arylalkyl besitzen und die anderen Reste R¹ und A in den Struktureinheiten der Formel I bzw. II die obige Bedeutung besitzen. Es liegen dann fluorhaltige Polycarbosilane vor, die lediglich in den Struktureinheiten der Formel I noch Arylsubstituenten enthalten können (wenn R¹ = Aryl). Oder es liegen fluorhaltige Polycarbosilane vor, die weder in den Struktureinheiten der Formel I noch in den Struktureinheiten der Formel II Arylsubstituenten tragen (wenn R¹ = Halogen, Alkyl, Cycloalkyl oder Arylalkyl).

In zweckmäßigen, Varianten der vorstehend beschriebenen fluorhaltigen Polycarbosilane besitzt A in allen Struktureinheiten der allgemeinen Formeln I bzw. II des Polycarbosilans nur eine einzige Bedeutung; es liegen dann z.B. solche fluorhaltigen Polycarbosilane vor, in denen die Struktureinheiten der allgemeinen Formeln I bzw. II aus Kombinationen von nicht mehr als sieben unterschiedlich substituierten Si-Einheiten und lediglich einer A-Einheit aufgebaut sind.

In weiteren zweckmäßigen Varianten besitzt jeder der Substituenten R² und R³ in allen Struktureinheiten der Formel II des fluorhaltigen Polycarbosilans jeweils nur eine einzige Bedeutung. Es liegen dann z.B. fluorhaltige Polycarbosilane vor, die Struktureinheiten der Formel II enthalten, in denen alle R²R³Si-Einheiten identisch sind.

In anderen zweckmäßigen Varianten liegen fluorhaltige Polycarbosilane vor, bei denen in allen Struktureinheiten der allgemeinen Formel I R¹ jeweils nur eine einzige Bedeutung besitzt. Es liegen dann z.B. fluorhaltige Polycarbosilane mit Struktureinheiten der allgemeinen Formel I vor, in denen alle R¹FSi- Einheiten identisch sind.

In einer bevorzugten Variante liegt in den erfindungsgemäßen Polycarbosilanen nur ein einziger Typ der Struktureinheiten dem allgemeinen Formeln I bzw. II vor. Es liegen dann fluorhaltige Polycarbosilane vor, in denen nur ein einziger Typ eines Strukturelementes der allgemeinen Formel I und nur ein einziger Typ eines Strukturelementes der allgemeinen Formel II vorliegt, und wobei A in allen Struktureinheiten der Formel I bzw. II identisch ist; oder es liegen fluorhaltige Polycarbosilane ausschließlich auf Basis der allgemeinen Formel I (100 Mol-%; Struktureinheit der allgemeinen Formel II: 0 Mol %; ohne Berücksichtigung des molaren prozentualen Anteils der Endgruppen) vor, in denen die R¹FSi-Einheiten und die A-Einheiten in allen Struktureinheiten des fluorhaltigen Polycarbosilans identisch sind.

In den erfindungsgemäßen Polycarbosilanen auf Basis der Struktureinheiten der Formeln I bzw. I und II kann R¹ für Halogen stehen; Halogen steht hierbei vorzugsweise mit der Bedeutung Fluor, Chlor oder Brom.

In den erfindungsgemäßen fluorhaltigen Polycarbosilanen auf Basis der Struktureinheiten der Formeln I bzw. I und II können die Reste R¹, R² und/oder R³ für Alkyl stehen; Alkyl besitzt hierbei die Bedeutung eines geradkettigen oder verzweigten Alkylrestes, der ggf. durch inerte Reste weiter substituiert sein kann. Beispiele für Alkyl sind Methyl, Ethyl, Propyl, Butyl, Pentyl, Hexyl, Octyl, Dodecyl, Hexadecyl, Isopropyl, Isobutyl oder Tertiärbutyl.

In den erfindungsgemäßen fluorhaltigen Polycarbosilanen auf Basis der Struktureinheiten der Formeln I bzw. I und II können die Reste R¹, R² und/oder R³ für Cycloalkyl stehen; Cycloalkyl steht hierbei mit der Bedeutung eines ggf. durch inerte Reste weiter substituierten Cycloalkylrestes. Beispiele für Cycloalkyl sind Cyclopentyl oder Cyclohexyl.

In den erfindungsgemäßen fluorhaltigen Polycarbosilanen auf Basis der Struktureinheiten der Formeln I bzw. I und II können die Reste R¹, R² und/oder R³ für Arylalkyl stehen; Beispiele für Arylalkylgruppen sind Benzyl oder Phenylethyl.

In den erfindungsgemäßen fluorhaltigen Polycarbosilanen auf Basis der Struktureinheiten der Formeln I bzw. I und II können die Reste R¹, R² und/oder R³ für Aryl stehen; Aryl steht hierbei mit der Bedeutung eines unsubstituierten oder inert substituierten aromatischen Kohlenwasserstoffrestes. Beispiele für Aryl sind Phenyl, Naphtyl, p-Diphenyl oder Alkylarylreste wie Tolyl, Ethylphenyl oder Propylphenyl. Sofern in den Struktureinheiten der Formeln I und/oder II der fluorhaltigen Polycarbosilane die Substituenten R¹, R² und/oder R³ mit der Bedeutung Aryl stehen, so ist insbesondere der Phenylrest bevorzugt. In den Struktureinheiten der Formel I liegen dann Phenylfluorsilylen-Gruppen vor. In den Struktureinheiten der Formel II liegen dann beispielsweise als R²R³Si-Gruppen Phenyl-alkylsilylen-, Phenyl-cycloalkylsilylen-, Phenyl-arylalkylsilylen- und/oder Diphenylsilylen-Gruppen vor.

Eine weitere zweckmäßige Variante der Erfindung umfaßt solche fluorhaltigen Polycarbosilane auf Basis der Struktureinheiten der Formeln I bzw. I und II, in denen R² und R³ unabhängig voneinander für niederes Alkyl oder Aryl, vorzugsweise für Methyl, Ethyl, Propyl, Butyl oder Phenyl, stehen. Beispiele für solche in den Struktureinheiten der Formel II enthaltenen R²R³Si-Einheiten sind Dimethylsilylen, Diethylsilylen, Dipropylsilylen, Dibutylsilylen, Diphenylsilylen, Methylethylsilylen, Methylpropylsilylen, Methylbutylsilylen oder Methylphenylsilylen.

In den erfindungsgemäßen, fluorhaltigen Polycarbosilanen auf Basis der Struktureinheiten der Formeln I bzw. I und II kann die Einheit A für geradkettige oder verzweigte Alkylenreste oder für Cycloalkylenreste stehen, die ggf. durch inerte Substituenten weiter substituiert sein können. Vorteilhaft sind C₁ - bis C₆-Alkylenreste wie Methylen, Ethylen, Trimethylen, Propylen, Tetramethylen, Pentamethylen, Hexamethylen und phenylsubstituierte Alkylenreste mit 8 bis 9 C-Atomen wie Phenylethylen oder 1-Methyl-1-phenylethylen; bevorzugt sind die niederen Alkylenreste wie Methylen, Ethylen, Trimethylen oder Propylen, insbesondere aber Methylen. Falls die Einheit A jedoch für einen Cycloalkylenrest steht, sind Cycloalkylenreste wie Cyclopentylen oder Cyclohexylen zweckmäßig.

Die erfindungsgemäßen fluorhaltigen Polycarbosilane sind feste oder flüssige oder viskose Materialien mit einer Grundstruktur, in der im wesentlichen jedes Siliciumatom einerseits nur an Kohlenstoffatome oder andererseits nur an Kohlenstoff- und Halogenatome gebunden ist. Diese fluorhaltigen Polycarbosilane zeichnen sich demgemäß dadurch aus, daß sie einen Si-Si-Bindungsanteil von nur maximal 5 % besitzen. In den erfindungsgemäßen Beispielen liegt der Si-Si-Bindungsanteil sogar unter 1 %.

Der Halogengehalt der fluorhaltigen Polycarbosilane kann je nach den im Molekül vorhandenen Halogenatomen unterschiedliche Werte annehmen Im Falle der besonders günstigen fluorierten Polycarbosilane sind solche fluorierten Polycarbosilane bevorzugt, deren Fluorgehalt 0,1 bis 48 Gew.-%, insbesondere aber 1 bis 48 Gew.-%, beträgt.

Die Anzahl der Struktureinheiten, die die erfindungsgemäßen Polycarbosilane aufbauen, liegt im allgemeinen bei Werten zwischen 10 und 500, vorzugsweise zwischen 30 und 150. Die fluorhaltigen Polycarbosilane weisen damit mittlere Molekulargewichte im Bereich von 750 bis 300000 g/Mol auf, vorzugsweise im Bereich von 2000 bis 50000 g/Mol.

In einer Abwandlung der Erfindung können die fluorhaltigen Polycarbosilane durch Verzweigungsgruppen der allgemeinen Formeln III und/oder V 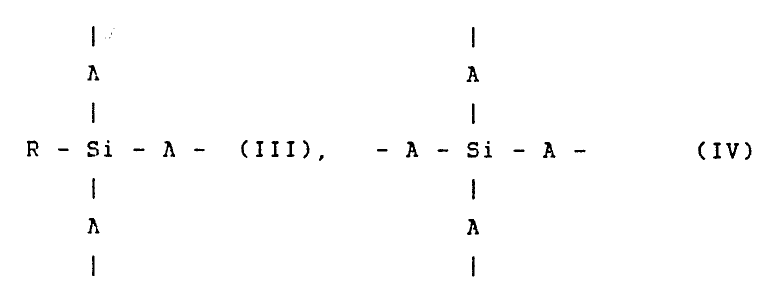
worin
A die obige Bedeutung und R die Bedeutung Halogen, Alkyl, Cycloalkyl, Arylalkyl oder Aryl besitzt. Durch die Verzweigungsgruppen III und/oder IV können die erfindungsgemäßen Polycarbosilane bis zu 50 % vernetzt sein.

Die fluorhaltigen Polycarbosilane auf Basis der allgemeinen Struktureinheiten der Formeln I bzw. I und II können verschiedene Endgruppen aufweisen. Die Endgruppen können Halogen-, Alkyl-, Cycloalkyl-, Arylalkyl-, Aryl-, Alkoxyl- oder Hydroxylgruppen sein. Beispiele für Endgruppen sind Chlor, Brom, Fluor, Methyl, Phenyl, Methoxyl oder Hydroxyl.

Die Erfindung betrifft auch ein Verfahren zur Herstellung von fluorhaltigen Polycarbosilanen auf Basis der Struktureinheiten der Formeln I bzw. I und II, wonach man
Polycarbosilane, die Struktureinheiten der allgemeinen Formel V enthalten, 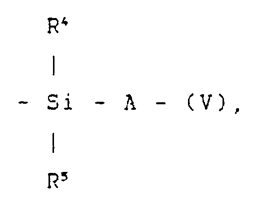
worin
R⁴ für Alkyl, Cycloalkyl, Arylalkyl oder Aryl steht, wobei R⁴ in verschiedenen Einheiten ein und desselben Polycarbosilans auch unterschiedliche Bedeutung besitzen kann, und R⁵ für Aryl steht, wobei R⁵ in verschiedenen Einheiten ein und desselben Polycarbosilans auch für unterschiedliche Arylreste stehen kann,
mit wenigstens einem Halogenierungsreagenz unter polaren oder ionischen Reaktionsbedingungen, vorzugsweise in Gegenwart einer Lewis-Säure, so umsetzt, daß die in den Struktureinheiten der allgemeinen Formel V enthaltenen Arylsubstituenten teilweise oder vollständig durch Halogenatome ausgetauscht werden, und
danach die in das Polycarbosilan eingeführten Halogenatome unter polaren oder ionischen Reaktionsbedingungen ganz oder teilweise gegen Fluoratome austauscht.

Zur Durchführung des Verfahrens werden als Edukte arylsubstituierte Polycarbosilane, gegebenenfalls in Gegenwart einer Lewis-Säure als Katalysator, unter Schutzgasatmosphäre in einem unter den Reaktionsbedingungen inerten organischen Lösungsmittel unter weitgehendem Wasserausschluß mit wenigstens einem polar oder ionisch reagierenden Halogenierungsreagenz bis zu mehreren Stunden umgesetzt.

Als Polycarbosilanedukte können hierfür an sich alle Polycarbosilane dienen, die Arylsubstituenten an den Siliciumatomen tragen, wobei die Phenylgruppe ein bevorzugter Arylsubstituent ist. Die eingesetzten Polycarbosilane können zwar auch auf pyrolytischem Wege gewonnene Polycarbosilane mit Phenylsubstituenten sein, doch sind zur Herstellung der erfindungsgemäßen halogenierten Polycarbosilane solche Polycarbosilane als Edukte bevorzugt, die auf nicht-pyrolytischem Wege gewonnen wurden. Solche nicht-pyrolytisch hergestellten Polycarbosilane sind z.B. in der deutschen Patentanmeldung 38 41 348 beschrieben. Sie werden erhalten, indem man monomere Dihalogensilane (z.B. R⁴R⁵SiCl₂, gegebenenfalls im Gemisch mit z.B. R²R³SiCl₂) mit monomeren Dihalogenkohlenwasserstoffen (z.B. Cl-A-Cl etc.) in Gegenwart von Alkalimetallen unter Schutzgas in einem inerten organischen Lösungsmittel co-kondensiert. Durch Zusatz geeigneter Verzweigungsreagentien (z.B. RSiCl₃, SiCl₄ etc.) können durch solche Cokondensationsreaktionen auch Verzweigungsgruppen der Formeln III und/oder IV enthaltende Polycarbosilane oder durch Zusatz von Kettenabbruchreagentien (z.B. R₃SiCl, CH₃Cl etc.) auch Polycarbosilane mit speziell eingestelltem Kondensationsgrad erhalten werden. Andere Eduktpolycarbosilane werden nach an sich bekannten Verfahren durch Cokondensation von monomeren Dihalogensilanen mit Styrolderivaten in Gegenwart von Alkalimetallen gewonnen. Solche Copolymere, z.B. aus Dimethyldichlorsilan und Styrol, können ebenfalls durch Zusatz geeigneter Verzweigungsreagentien wie z.B. Methyltrichlorsilan verzweigt werden. Solche copolymeren Carbosilane aus Styrol- und Dimethylsilylen-Einheiten sind z.B. in dem US-Patent 3 187 031 beschrieben.

Für die Herstellung der halogenierten Polycarbosilane aus phenylsubstituierten Polycarbosilanen können alle an sich üblichen Halogenierungsreagentien eingesetzt werden, die in polarer oder ionischer Weise reagieren. Ausgenommen sind daher alle solchen Halogenierungsreagentien, die ausschließlich radikalisch reagieren können. Geeignete Halogenierungsreagentien für die genannten Umsetzungen sind Halogenwasserstoffsäuren wie HBr, HCl oder HF; Ammoniumsalze dieser Halogenwasserstoffsäuren wie NH₄Br, NH₄Cl oder NH₄F; saure Alkalifluoride wie Natriumhydrogenfluorid (NaHF₂ bzw. NaF·HF) oder saure Kaliumfluoride wie KF·(HF)ₙ mit n=1 bis 3; Fluorwasserstoffaddukte an Ammoniumfluorid wie NH₄F·(HF)ₙ oder NH₄F·HF; oder andere Halogenierungsreagentien wie Phosphorpentachlorid, Antimonpentachlorid, Antimontrifluorid, Arsentrifluorid, Titantetrafluorid, Zinntetrafluorid, Kupferdifluorid, Zinkdifluorid etc. Bevorzugte Halogenierungsreagentien sind hierbei die Halogenwasserstoffsäuren und deren Ammoniumsalze, die Fluorwasserstoff-Addukte an Ammoniumfluorid und die sauren Alkalifluoride. Es können zwar auch elementare Halogene unter polaren oder ionischen Reaktionsbedingungen eingesetzt werden. Sofern ein Teil der Phenylsubstituenten im halogenierten Polycarbosilan erhalten bleiben soll, ist dabei jedoch zu beachten, daß (neben dem Austausch von Phenylsubstituenten gegen Halogenatome) in den verbleibenden Phenylsubstituenten auch eine elektrophile aromatische Substitution von Wasserstoffatomen durch Halogenatome stattfinden kann. Eine solche elektrophile aromatische Substitution in den Phenylsubstituenten findet bei Einsatz der übrigen, obengenannten Halogenierungsreagentien dagegen nicht statt.

Die polare oder ionische Reaktionsweise des Halogenierungsreagenzes wird dadurch gewährleistet, daß die eingesetzten Halogenierungsreagentien einerseits von sich aus bereits polar oder ionisch reagierende Verbindungen sind, wie z.B. HCl, HF, NH₄Cl, NH₄F, NH₄F·(HF)ₙ, NaF·HF, KF·(HF)ₙ, PCl₅, SbCl₅, SbF₃, AsF₃, TiF₄, SnF₄, CuF₂, ZnF₂ etc. Oder andererseits werden die polaren oder ionischen Reaktionsbedingungen bei Verwendung von Halogenierungsreagentien, die sowohl polar oder ionisch als auch radikalisch reagieren können (z.B. HBr, Halogene), dadurch sichergestellt, daß die Umsetzungen in Gegenwart von Lewis-Säure-Katalysatoren ausgeführt werden. Aber auch bei Umsetzungen mit Halogenierungsreagentien, die von sich aus zwar bereits polar und ionisch reagieren und die selbst keine Lewis-Säuren sind, kann die Anwesenheit von Lewis-Säure-Katalysatoren vorteilhaft sein, so z.B. bei Umsetzungen mit Chlorwasserstoff. Als Lewis-Säure-Katalysatoren eignen sich für das erfindungsgemäße Verfahren zur Herstellung halogenierter Polycarbosilane die als solche an sich bereits bekannten, elektrophilen und katalytisch wirksamen Elektronenpaarakzeptor-Verbindungen der Halogene mit den Elementen Bor, Aluminium, Phosphor, Antimon, Arsen, Eisen, Zink oder Zinn. Beispiele für Lewis-Säure-Katalysatoren sind Verbindungen wie BF₃, AlCl₃, AlBr₃, PCl₅, SbCl₅, SbF₃, ZnF₂ etc.

Das organische Lösungsmittel, in welchem die Umsetzungen stattfinden, kann ein beliebiges mit den Halogenierungsreagentien und den gegebenenfalls anwesenden Lewis-Säure-Katalysatoren verträgliches Lösungsmittel sein, indem die als Edukte verwendeten Polycarbosilane löslich sind. Vorzugsweise ist dieses organische Lösungsmittel auch für die erfindungsgemäß herzustellenden halogenierten Polycarbosilane ein Lösungsmittel. Geeignete Lösungsmittel können z.B. einerseits Kohlenwasserstoffe wie Benzol, Toluol, Xylol oder Paraffine, oder andererseits voll- oder teilhalogenierte Kohlenwasserstoffe wie Tetrachlorkohlenstoff, Chloroform, Methylenchlorid, Dichlorethan, Fluorchlorkohlenwasserstoffe oder wasserstoffhaltige Fluorchlorkohlenwasserstoffe sein. Vorteilhaft werden solche Lösungsmittel verwendet, die sich nach der Reaktion leicht durch Destillation wieder entfernen lassen. Die Menge des Lösungsmitels kann hierbei je nach den praktischen Erfordernissen in weiten Bereichen variiert werden.

Die Umsetzungen können in bequemer Weise in Temperaturbereichen um Raumtemperatur ausgeführt werden. Weiterhin werden die Reaktionen im allgemeinen unter einem geeigneten Schutzgas durchgeführt. Geeignete Schutzgase sind z.B. Stickstoff oder Argon. Der Halogenierungsgrad der Produkte kann bei diesen Umsetzungen leicht gesteuert werden, indem man einerseits die Zahl der austauschbaren Substituenten (z.B. Phenyl) im Polycarbosilanedukt vorgibt, oder indem man andererseits die Reaktionszeit und/oder die Menge an zugeführtem Halogenierungsreagenz erhöht oder vermindert.

Die Reaktion wird im allgemeinen so geführt, daß man gasförmige Halogenierungsreagentien in eine wasserfreie Lösung des Polycarbosilans einleitet, die gegebenenfalls katalytische Mengen an Lewis-Säure-Katalysator enthält. Werden dagegen feste Halogenierungsreagentien, wie z.B. saure Alkalifluoride, Ammoniumfluorid oder Ammoniumfluorid-HF-Addukte verwendet, so werden zunächst diese Halogenierungsreagentien, gegebenenfalls zusammen mit einem Lewis-Säure-Katalysator, im Reaktionsgefäß als solche (z.B. in Pulverform) oder in einem Lösungsmittel suspendiert vorgelegt. Hierzu wird anschließend eine Lösung des Eduktpolycarbosilans zugetropft.

Nach erfolgter Umsetzung kann man das halogenierte Polycarbosilan durch jede geeignete Methode aus dem Reaktionsgemisch gewinnen. Ist das halogenierte Polycarbosilan im Lösungsmittel löslich, so lassen sich die sonstigen unlöslichen Komponenten, z.B. gegebenenfalls der im Lösungsmittel suspendierte Lewis-Säure-Katalysator, durch Filtration abtrennen. Das im Lösungsmittel zurückbleibende halogenierte Polycarbosilan kann danach gegebenenfalls weiteren Reinigungsmaßnahmen unterworfen werden und durch Entzug des Lösungsmittels isoliert werden. Sind die gebildeten halogenierten Polycarbosilane im Lösungsmittel aber unlöslich, so können sie durch ein geeignetes anderes Lösungsmittel in Lösung gebracht werden, durch Filtration von unlöslichen Bestandteilen abgetrennt und durch Entzug des Lösungsmittels isoliert werden. Nachfolgend können die isolierten Produkte zur Entfernung von noch anhaftenden Lösungsmittelresten zusätzlich im Vakuum und gegebenenfalls bei erhöhten Temperaturen behandelt ("getrocknet") werden.

Nach diesem Verfahren können sowohl einheitlich halogenierte, also mit nur einer Art von Halogenatom, als auch gemischt halogenierte Polycarbosilane, also solche Polycarbosilane mit verschiedenen Halogenatomen, erhalten werden. Einheitlich halogenierte Polycarbosilane werden z.B. erhalten, indem man als Ausgangsverbindung ein nicht-halogeniertes Polycarbosilan der beschriebenen Art mit nur einem einzigen Halogenierungsmittel umsetzt. Andererseits lassen sich auch gemischt halogenierte Polycarbosilane auf direktem Wege aus den nicht-halogenierten Edukt-Polycarbosilanen herstellen, indem man letztere gleichzeitig mit z.B. zwei Halogenierungsmitteln umsetzt, die verschiedene Halogenatome tragen; beispielsweise lassen sich so mit einem HCl/HBr-Gasgemisch Chlor-Brom-haltige Polycarbosilane gewinnen. Die Reaktionsbedingungen sind hierbei analog zu den Umsetzungen mit nur einem Halogenierungsreagenz.

Weiterhin ist es möglich, einheitlich halogenierte Polycarbosilane ausgehend von bereits mit einem anderen Halogenatom halogenierten Polycarbosilanen durch vollständigen Halogenaustausch herzustellen; z.B. können auf diese Weise Chlor- oder Bromatome vorteilhaft gegen Fluoratome ausgetauscht werden. Führt man dagegen nur einen teilweisen Halogenaustausch durch, erhält man aus dem eingesetzten einheitlich halogenierten Polycarbosilan als Produkt ein gemischt halogeniertes Polycarbonsilan; so lassen sich z.B. Chlor-Fluor-haltige Polycarbosilane aus chlorierten Polycarbosilanen durch teilweisen Austausch der Chloratome gegen Fluoratome herstellen. Ferner ist es auch möglich, gemischt halogenierte Polycarbosilane in andere gemischt halogenierte Polycarbosilane umzuwandeln; beispielsweise lassen sich so Chlor-Fluor-haltige Polycarbosilane auch aus Chlor-Brom-haltigen Polycarbosilanen herstellen. Hierbei kann die Reaktion leicht so gesteuert werden, daß zunächst nur die Bromatome vollständig gegen Fluoratome ausgetauscht werden, die Chloratome dagegen im Polycarbosilan erhalten bleiben. Die Reaktionsbedingungen für die Halogenaustauschreaktionen sind hierbei analog zu den oben bereits für die Halogenierungsreaktionen beschriebenen Bedingungen. Durch diesen Halogenaustausch wird es möglich, auch solche halogenierten Polycarbosilane leicht zu gewinnen, die auf direktem Wege (d.h. ohne Umhalogenierung) nur schwer oder nur mit unbefriedigender Ausbeute herstellbar sind. Als Halogenatom, welches gegen ein anderes ausgetauscht werden soll, eignet sich das Bromatom ganz besonders vorteilhaft.

Die Erfindung betrifft ferner ein Verfahren zur Herstellung von fluorierten Polycarbosilanen, wonach man Polycarbosilane, die Struktureinheiten der allgemeinen Formel Ia bzw. der allgemeinen Formeln Ia und IIa enthalten, 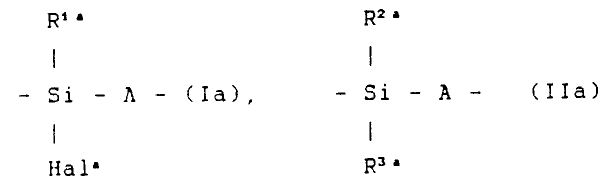
worin
A die obige Bedeutung, R²^{a} und R³^{a} die für R² und R³ angegebene Bedeutung besitzen, und worin
R^{1a} für Chlor, Brom, Alkyl, Cycloalkyl, Arylalkyl oder Aryl steht, wobei R^{1a} in verschiedenen Einheiten ein und desselben Polycarbosilans auch unterschiedliche Bedeutung besitzen kann, und worin
Hal^{a} für Chlor oder Brom steht, wobei Hal^{a} in verschiedenen Einheiten ein und desselben Polycarbosilans auch unterschiedliche Bedeutung besitzen kann,
derart mit einem Fluorierungsreagenz umsetzt, daß die im Polycarbosilan enthaltenen Chlor-, Brom- und gegebenenfalls Arylsubstituenten teilweise oder vollständig durch Fluoratome ausgetauscht werden.

Die Herstellung der fluorierten Polycarbosilane noch dem vorstehenden Verfahren wird in analoger Weise zu den weiter oben bereits beschriebenen Halogenierungs- und Halogenaustauschreaktionen durchgeführt. Als Edukte finden hierbei bevorzugt die weiter oben bereits beschriebenen, chlorierten und/oder bromierten Polycarbosilane Verwendung, d.h. solche halogenierten Polycarbosilane, die durch polare oder ionische Halogenierung insbesondere aus nicht-pyrolytisch hergestellten, phenylsubstituierten Polycarbosilanen gewonnen wurden, Daneben können aber auch an sich bekannte chlorierte oder bromierte Polycarbosilane- eingesetzt werden, z.B. solche, die aus der US 4 761 458 bekannt sind und die durch radikalische Halogenierung aus pyrolytisch hergestellten Polycarbosilanen gewonnen wurden.

Die für diesen Halogenaustausch besonders geeigneten Fluorierungsmittel sind Fluorwasserstoff, Ammoniumfluorid oder Addukte von Fluorwasserstoff an Ammoniumfluorid, saure Alkalifluoride und auch SbF₃ , AsF₃ , TiF₄ , SnF₄, CuF₂, ZnF₂ etc, Bevorzugt werden die Ammoniumsalze, z.B. NH₄F·(HF)ₙ, NH₄F·HF oder NH₄F, bei deren Einsatz sich die Gegenwart von zusätzlichen Lewis-Säure-Katalysatoren erübrigt. Die Reaktionen lassen sich weiterhin leicht so führen, daß entweder alle im Edukt enthaltenen Chlor- oder Bromatome, nur ein Teil der im Edukt enthaltenen Chlor- oder Bromatome ausgetauscht werden, Aus Chlor-Brom-haltigen Polycarbosilanen kann man darüber hinaus z.B. auch leicht nur die Bromatome teilweise oder vollständig austauschen, ohne den Gehalt an Chlor zu verändern; so erhält man bei vollständigem Austausch von Brom gegen Fluor Chlor-Fluor-haltige Polycarbosilane bzw. bei nur teilweisem Austausch der Bromatome gemischt halogenierte Polycarbosilane, die gleichzeitig Fluor-, Chlor- und Bromatome enthalten. Unter schärferen Reaktionsbedingungen werden auch die im Polycarbosilan gegebenenfalls noch anwesendenden Arylsubstituenten ganz oder teilweise durch Fluoratome ausgetauscht.

Die erfindungsgemäßen fluorhaltigen Polycarbosilane zeichnen sich durch definierte Eigenschaften aus, die durch gezielte Variation der Molekülgröße, Zahl und Art der Vernetzungen, durch entsprechende Wahl der Gruppen A, R¹, R² und R³, sowie durch Art und Gehalt der Halogenatome bestimmt werden. Bei den einheitlich halogenierten Polycarbosilanen zeichnen sich die fluorierten Polycarbosilane aufgrund ihrer unerwartet großen Stabilität aus, wodurch sie für zahlreiche Anwendungen besonders geeignet sind. Bei den gemischt halogenierten Polycarbosilanen wird durch den Einbau eines zweiten (Br/F; Cl/F) bzw. eines dritten Halogens (Br, Cl, F) die Stabilität der Polycarbosilane weiter erhöht. Auch hier zeichnen sich Chlor- und insbesondere Fluor-haltige Produkte durch besonders günstige Stabilitäten für zahlreiche Anwendungszwecke aus, während die reaktionsfähigeren Brom-haltigen Produkte sich insbesondere vorteilhaft als Edukte für Halogenaustauschreaktionen sowie andere Austauschreaktionen eignen. Besonders günstige Eigenschaften weisen vor allem jedoch die einheitlich fluorierten Polycarbosilane auf, die in Abhängigkeit des Fluorierungsgrades ein breites Spektrum an flüssigen, viskosen und festen Produkten liefern und die durch die hohe Si-F-Bindungsenergie in besonders großem Maße stabilisiert sind. Ähnlich günstige chemische und physikalische Eigenschaften werden nur bei den gemischt halogenierten Chlor-Fluor-haltigen Polycarbosilanen erreicht.

Die erfindungsgemäßen fluorhaltigen Polycarbosilane, eignen sich als wertvolle Ausgangspolymere für die Herstellung technisch hochwertiger Siliciumcarbid-Keramiken, sind anererseits aber auch hervorragend für diverse andere technische Anwendungen geeignet, z.B. als Bindematerialien oder Beschichtungsmaterialien. Weitere Anwendungsmöglichkeiten sind Verwendungen für Imprägnierungen, Fibern und sonstige Anwendungsgebiete, in denen auch nichthalogenierte Polycarbosilane zum Einsatz gelangen.

Die erfindungsgemäßen Verfahren zur Herstellung fluorhaltiger Polycarbosilane zeichnen sich dadurch aus, daß sie es im Gegensatz zu den bisher bekannten Verfahren ermöglichen, gezielt und genau definierte, einheitlich halogenierte sowie gemischt halogenierte Polycarbosilane jeder gewünschten Zusammensetzung und Konsistenz herzustellen. Die Eigenschaften dieser halogenierten Polycarbosilane können durch diese Verfahren in der Art und in dem Grad der Halogenierung gezielt und in einfacher Weise modifiziert werden. Hierdurch können eine Vielzahl halogenierter Polycarbosilane zur Verfügung gestellt werden, die durch gezielte Modifizierung optimal an den jeweiligen Anwendungszweck angepaßt werden können.

Im folgenden wird die Erfindung anhand von Beispielen weiter erläutert werden, ohne sie jedoch in ihrem Umfang zu beschränken. Die in den Beispielen enthaltenen Teil- und Prozentangaben sind als Gewichtsprozentangaben zu verstehen, sofern nichts anderes angegeben ist, Alle Umsetzungen wurden in Standard-Laboratoriumsapparaturen durchgeführt, Die hergestellten Verbindungen wurden durch Elementaranalye und spektroskopische Methoden (NMR = Kernresonanzspektroskopie, IR = Infrarotspektroskopie, MS = Massenspektroskopie) analysiert.

### Beispiele

### Beispiel 1 (Zwischenprodukt)

20 g Polymethylphenylcarbosilan (mittleres Molekulargewicht 5000 g/Mol; Elementaranalyse: Si 32,18 Gew.-%; (58,32 Gew.-%; H 5,90 Gew.-%) wurde in 150 ml trockenem Benzol gelöst und mit einer katalytischen Menge an sublimierten Aluminiumchlorid (0,9 g) versetzt. Anschließend wurde durch dieses Gemisch über einen Zeitraum von 15 h trockenes Chlorwasserstoff-Gas geleitet. Nach Beendigung der Umsetzung wurde der Aluminiumchloridkatalysator abfiltriert, das Lösungsmittel Benzol abdestilliert und der verbliebene Rückstand bei 120 °C im Vakuum getrocknet, Man erhielt 14,1 g eines hellgelben Feststoffes, der sich im IR- und ¹H-NMR-Spektrum (Protonenkernresonanzspektrum: 7,3 ppm) als ein noch Phenylgruppen-haltiges, chloriertes Polycarbosilan erwies. Die Elementaranalyse für dieses chlorierte Polycarbosilan ergab folgende Zusammensetzung: Cl 28,4 Gew.-%; Si 33,5 Gew.-%; C 31,97 Gew.-%, H 5,01 Gew.-%. Das IR-Spektrum (KBr) wies folgende charakteristischen Banden auf (in cm⁻¹): 3068 (C-H-Streckschwingung der Phenylgruppen), 3011 (schwach), 2957 (C-H-Streckschwingung CH₃/CH₂), 2895, 1427 (C-C-Streckschwingung der Phenylgruppen), 1404 (CH₂-Deformationsschwingung der Si-CH₃), 1355 (CH₂-Deformationsschwingung der SiCH₂Si), 1027 (CH₂-der SiCH₂Si; breit).

### Beispiel 2 (Zwischenprodukt)

20 g Polymethylphenylcarbosilan (wie in Beispiel 1) wurden in 150 ml trockenem Benzol gelöst und mit einer katalytischen Menge Aluminiumbromid (1 g) versetzt. Anschließend wurde durch dieses Gemisch über einen Zeitraum von 15 h trockenes Bromwasserstoff-Gas geleitet, Nach Beendigung der Umsetzung wurde der Aluminiumbromid-Katalysator abfiltriert, das Lösungsmittel Benzol abdestilliert und der verbliebene Rückstand bei 150 °C im Vakuum getrocknet. Man erhielt 13,0 g eines gelbbraunen Feststoffes, der sich im IR- und ¹H-NMR-Spektrum als ein Phenylgruppen-haltiges, bromiertes Polycarbosilan erwies. Die Elementaranalyse dieses bromierten Polycarbosilans ergab folgende Zusammensetzung: Br 46,3 Gew.-%; Si 31,7 Gew.-%; C 18,04 Gew.-%; H 3,2 Gew.-%.

### Beispiel 3 (Zwischenprodukt)

20 g Polymethylphenylcarbosilan (wie in Beispiel 1) wurden in 150 ml trockenem Benzol gelöst und mit einer katalytischen Menge an sublimiertem Aluminiumchlorid (0,9 g) versetzt. Anschließend wurde durch dieses Gemisch über einen Zeitraum von 15 h trockenes Chlorwasserstoff-Gas und nachfolgend über einen Zeitraum von nochmals 7 h trockenes Bromwasserstoff-Gas geleitet. Nach Beendigung der Umsetzung wurde der Aluminiumchlorid-Katalysator abfiltriert, das Lösungsmittel Benzol abdestilliert und der verbliebene Rückstand bei 120 °C im Vakuum getrocknet, Man erhielt 12 g eines gelben Feststoffes, der sich im IR- und ¹H-NMR-Spektrum als ein noch Phenylgruppen-haltiges, Chlor-Brom-haltiges Polycarbosilan erwies. Die Elementaranalyse für dieses Chlor-Brom-haltige Polycarbosilan ergab folgende Zusammensetzung: Br 10,9 Gew.-%; Cl 16,4 Gew.-%; Si 32,2 Gew.-%; C 32,8 Gew.-%; H 5,2 Gew.-%;

### Beispiel 4

Zu 3 g Ammoniumfluorid (zuvor bei 70 °C im Vakuum getrocknet) wurde eine Lösung von 10 g des in Beispiel 1 erhaltenen chlorierten Polycarbosilans in 150 ml Chloroform bei Raumtemperatur unter Rühren und Schutzgas zugetropft. Nach einer Reaktionszeit von 10 h wurden die Ammoniumsalze abfiltriert, das Lösungsmittel Chloroform abdestilliert und der verbliebene Rückstand bei 120 °C im Vakuum getrocknet. Man erhielt 8,9 g eines hellgelben Feststoffes, der sich im IR- und ¹H-NMR-Spektrum, sowie durch die Elementaranalyse als ein Chlor-Fluor-haltiges Polycarbosilan mit folgender Zusammensetzung erwies: F 2,5 Gew.-%; Cl 26,2 Gew.-%; Si 33,6 Gew-%; C 32,0 Gew.-%; H 5,0 Gew.-%.

### Beispiel 5

Zu 13,2 g NH₄F·HF (zuvor im Vakuum bei 50 °C getrocknet) wurde eine Lösung von 10 g des in Beispiel 1 erhaltenen chlorierten Polycarbosilans in 150 ml Chloroform bei Raumtemperatur unter Rühren und Schutzgas zugetropft. Nach einer Reaktionszeit von 10 h wurden die Ammoniumsalze abfiltriert, das Lösungsmittel Chloroform abdestilliert und der verbliebene Rückstand bei 120 °C im Vakuum getrocknet. Man erhielt 8,2 g eines gelben Feststoffes, der sich im IR- und ¹H-NMR-Spektrum, sowie durch die Elementaranalyse als ein Chlor-Fluor-haltiges Polycarbosilan folgender Zusammensetzung erwies: F 4,7 Gew.-%; Cl 20,6 Gew.-%; Si 33,7 Gew.-%; C 32,3 Gew.-%; H 5,1 Gew.-%.

### Beispiel 6

Zu 10 g Na₄F·HF (zuvor im Vakuum bei 50 °C getrocknet) wurde eine Lösung des in Beispiel 3 erhaltenen Chlor-Brom-haltigen Polycarbosilans in 150 ml Chloroform bei Raumtemperatur unter Rühren und Schutzgas zugetropft. Nach einer Reaktionszeit von 12 h wurden die Ammoniumsalze abfiltriert, das Lösungsmittel Chloroform abdestilliert und der verbliebene Rückstand bei 100 °C im Vakuum getrocknet. Man erhielt 3,6 g eines rotgelben Feststoffes, der sich im IR- und ¹H-NMR-Spektrum, sowie durch die Elementaranalyse als ein Chlor-Fluor-haltiges Polycarbosilan mit folgenden Halogengehalten erwies: F 10,9 Gew.-%; Cl 3,7 Gew.-%.

### Beispiel 7

Zu 10 g Ammoniumfluorid (zuvor im Vakuum bei 70 °C getrocknet) wurde eine Lösung von 10 g des in Beispiel 2 erhaltenen bromierten Polycarbosilans in 150 ml Chloroform bei Raumtemperatur unter Rühren und Schutzgas zu getropft. Nach einer Reaktionszeit von 12 h wurden die Ammoniumsalze abfiltriert, das Lösungsmittel Chloroform abdestilliert und der verbliebene Rückstand bei Raumtemperatur im Vakuum getrocknet. Man erhielt 2,5 g eines weißgelben Feststoffes, der sich im IR- und ¹H-NMR-Spektrum, sowie durch die Elementaranalyse als ein fluoriertes Polycarbosilan mit einem Fluorgehalt von 17,5 Gew.-% erwies.

## Patentansprüche

1. Fluorhaltige Polycarbosilane auf Basis von Struktureinheiten der allgemeinen Formeln I bzw. I und II 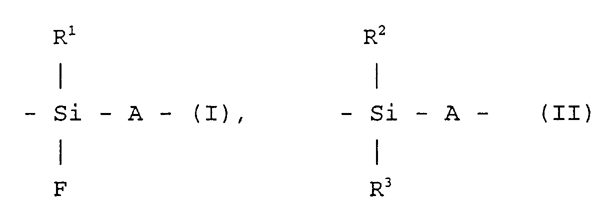 worin
R¹ für Halogen, Alkyl, Cycloalkyl, Arylalkyl oder Aryl steht, wobei R1 in verschiedenen Einheiten ein und desselben Polycarbosilans auch unterschiedliche Bedeutung besitzen kann,
R² und R³ unabhängig voneinander für Alkyl, Cycloalkyl,Arylalkyl oder Aryl stehen, wobei R² bzw. R³ in verschiedenen Einheiten ein und desselben Polycarbosilans auch unterschiedliche Bedeutung besitzen können,
A für geradkettige oder verzweigte Alkylen- oder für Cycloalkylen-Reste steht, die gegebenenfalls durch Phenyl-Substituenten weiter substituiert sein können, wobei A in verschiedenen Einheiten ein und desselben Polycarbosilans auch unterschiedliche Bedeutung besitzen kann,

2. Polycarbosilane gemäß Anspruch 1, dadurch gekennzeichnet, daß in den Strukturelementen der allgemeinen Formel I R¹ für Fluor, Chlor oder Brom, steht.

3. Polycarbosilane gemäß Anspruch 1, dadurch gekennzeichnet, daß in den Strukturelementen der allgemeinen Formel I R¹ für Alkyl, Cycloalkyl, Arylalkyl oder Aryl steht.

4. Polycarbosilane gemäß Anspruch 1, dadurch gekennzeichnet, daß in den Strukturelementen der allgemeinen Formel I R¹ für Fluor steht.

5. Polycarbosilane gemäß einem der Ansprüche 1 bis 4, dadurch gekennzeichnet, daß in den Struktureinheiten der allgemeinen Formel II R² und R³ unabhängig voneinander die Bedeutung Alkyl, Cycloalkyl oder Arylalkyl besitzen.

6. Polycarbosilane gemäß einem der Ansprüche 1 bis 5, dadurch gekennzeichnet, daß A in allen Struktureinheiten der allgemeinen Formeln I und II des Polycarbosilans nur eine einzige Bedeutung besitzt.

7. Polycarbosilane gemäß einem der Ansprüche 1 bis 6, dadurch gekennzeichnet, daß jeder der Substituenten R² und R³ in allen Struktureinheiten der Formel II des Polycarbosilanes jeweils nur eine einzige Bedeutung besitzt.

8. Polycarbosilane gemäß einem der Ansprüche 1 bis 7, dadurch gekennzeichnet, daß in allen Struktureinheiten der allgemeinen Formel I der Substituent R¹ nur eine einzige Bedeutung besitzt.

9. Polycarbosilane gemäß Anspruch 1, dadurch gekennzeichnet, daß R² und R³ unabhängig voneinander für Methyl, Ethyl, Propyl, Butyl oder Aryl, z.B. Phenyl, stehen.

10. Polycarbosilane gemäß Anspruch 1, dadurch gekennzeichnet, daß A für geradkettige oder verzweigte C₁- bis C₆-Alkylen-Reste oder für phenylsubstituierte Alkylen-Reste mit 8 bis 9 C-Atomen steht

11. Polycarbosilane gemäß Anspruch 10, dadurch gekennzeichnet, daß die C₁- bis C₆-Alkylen-Reste Methylen, Ethylen, Trimethylen oder Propylen, vorzugsweise Methylen, sind und die phenylsubstituierten Alkylen-Reste Phenylethylen oder 1-Methyl-1-phenylethylen sind.

12. Polycarbosilane gemäß Anspruch 1, dadurch gekennzeichnet, daß die Cycloalkylen-Reste Cyclopentylen oder Cyclohexylen sind.

13. Polycarbosilane gemäß Anspruch 1, dadurch gekennzeichnet, daß der Fluorgehalt 0,1 bis 48 Gew.-%, vorzugsweise 1 bis 48 Gew.-%, beträgt.

14. Polycarbosilane gemäß Anspruch 1, dadurch gekennzeichnet, daß die Summe der Struktureinheiten aus I und II zwischen 10 und 500, vorzugsweise zwischen 30 und 150, liegt.

15. Polycarbosilane gemäß Anspruch 1, dadurch gekennzeichnet, daß sie mittlere Molekulargewichte im Bereich von 750 bis 300.000 g/Mol aufweisen.

16. Polycarbosilane gemäß Anspruch 1, dadurch gekennzeichnet, daß sie Verzweigungsgruppen der allgemeinen Formeln III und/oder IV 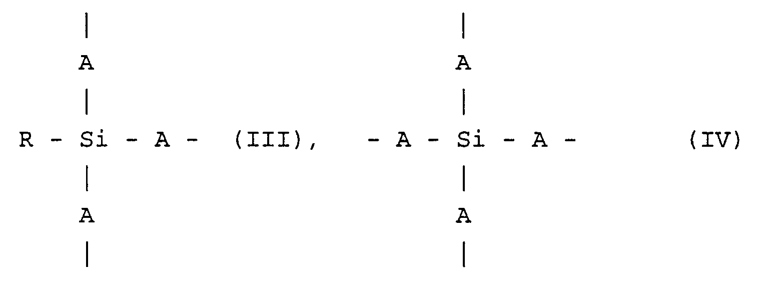 aufweisen, worin
A die obige Bedeutung und
R die Bedeutung Halogen, Alkyl, Cycloalkyl, Arylalkyl oder Aryl besitzt.

17. Polycarbosilane gemäß Anspruch 1, dadurch gekennzeichnet, daß sie als Endgruppen Halogen-, Alkyl-, Cycloalkyl-, Arylalkyl-, Aryl-, Alkoxyl- oder Hydroxylgruppen aufweisen.

18. Verfahren zur Herstellung von fluorhaltigen Polycarbosilanen nach Anspruch 1, dadurch gekennzeichnet, daß man
Polycarbosilane, die Struktureinheiten der allgemeinen Formel V enthalten, 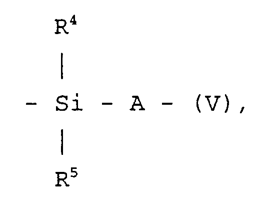 worin
R⁴ für Alkyl, Cycloalkyl, Arylalkyl oder Aryl steht, wobei R⁴ in verschiedenen Einheiten ein und desselben Polycarbosilans auch unterschiedliche Bedeutung besitzen kann, und R⁵ für Aryl steht, wobei R⁵ in verschiedenen Einheiten ein und desselben Polycarbosilans auch für unterschiedliche Arylreste stehen kann,
unter Schutzgasatmosphäre in einem inerten organischen Lösungsmittel unter weitgehendem Wasserausschluß,
mit wenigstens einem Halogenierungsreagenz unter polaren oder ionischen Reaktionsbedingungen, gegebenenfalls in Gegenwart einer Lewis-Säure, umsetzt, so daß die in den Struktureinheiten der allgemeinen Formel V enthaltenen Arylsubstituenten teilweise oder vollständig durch Halogenatome ausgetauscht werden, und
danach die in das Polycarbosilan eingeführten Halogenatome unter polaren oder ionischen Reaktionsbedingungen ganz oder teilweise gegen Fluoratome austauscht.

19. Verfahren zur Herstellung von fluorierten Polycarbosilanen nach Anspruch 1, dadurch gekennzeichnet, daß man Polycarbosilane, die Struktureinheiten der allgemeinen Formel Ia bzw. der allgemeinen Formeln Ia und IIa enthalten, 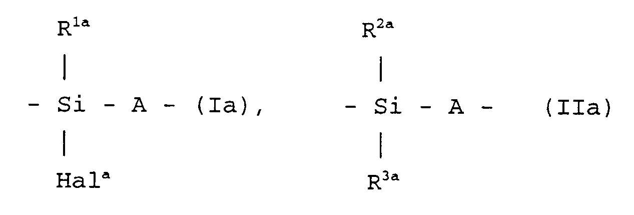 worin
A die obige Bedeutung, R^{2a} und R^{3a} die für R² und R³ angegebene Bedeutung besitzen, und worin
R^{1a} für Chlor, Brom, Alkyl, Cycloalkyl, Arylalkyl oder Aryl steht, wobei R^{1a} in verschiedenen Einheiten ein und desselben Polycarbosilans auch unterschiedliche Bedeutung besitzen kann, und worin
Hal^{a} für Chlor oder Brom steht, wobei Hal^{a} in verschiedenen Einheiten ein und desselben Polycarbosilans auch unterschiedliche Bedeutung besitzen kann,
mit einem Fluorierungsreagenz unter polaren oder ionischen Reaktionsbedingungen wie im Verfahren nach Anspruch 18 umsetzt, so daß die im Polycarbosilan enthaltenen Chlor-, Brom- und gegebenenfalls Arylsubstituenten ganz oder teilweise durch Fluoratome ausgetauscht werden.

## Claims

1. Fluorine-containing polycarbosilanes on the basis of structural units of the general formulae I or I and II 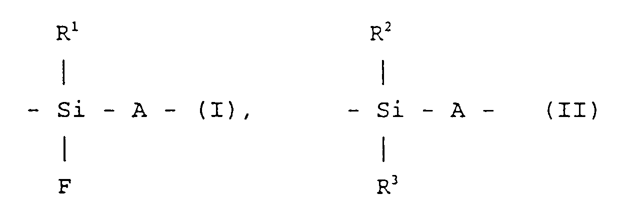 wherein
R¹ stands for halogen, alkyl, cycloalkyl, arylalkyl or aryl, where R¹ may also have different meanings in different units of one and the same polycarbosilane,
R² and R³, independently of each other, stand for alkyl, cycloalkyl, arylalkyl or aryl, where R² or R³ may also have different meanings in different units of one and the same polycarbosilane,
A stands for straight-chain or branched alkylene radicals or for cycloalkylene radicals which may optionally be further substituted by phenyl substituents, where A may also have different meanings in different units of one and the same polycarbosilane.

2. Polycarbosilanes according to Claim 1, characterised in that, in the structural elements of the general formula I, R¹ stands for fluorine, chlorine or bromine.

3. Polycarbosilanes according to Claim 1, characterised in that, in the structural elements of the general formula I, R¹ stands for alkyl, cycloalkyl, arylalkyl or aryl.

4. Polycarbosilanes according to Claim 1, characterised in that, in the structural elements of the general formula I, R¹ stands for fluorine.

5. Polycarbosilanes according to one of Claims 1 to 4, characterised in that, in the structural units of the general formula II, R² and R³, independently of each other, have the meaning alkyl, cycloalkyl or arylalkyl.

6. Polycarbosilanes according to one of Claims 1 to 5, characterised in that A has only one single meaning in all the structural units of the general formulae I and II of the polycarbosilane,

7. Polycarbosilanes according to one of Claims 1 to 6, characterised in that each of the substituents R² and R³ has in each case only one single meaning in all the structural units of formula II of the polycarbosilane.

8. Polycarbosilanes according to one of Claims 1 to 7, characterised in that the substituent R¹ has only one single meaning in all the structural units of the general formula I.

9. Polycarbosilanes according to Claim 1, characterised in that R² and R³, independently of each other, stand for methyl, ethyl, propyl, butyl or aryl, e.g. phenyl.

10. Polycarbosilanes according to Claim 1, characterised in that A stands for straight-chain or branched C₁- to C₆-alkylene radicals or for phenyl-substituted alkylene radicals with 8 to 9 C atoms.

11. Polycarbosilanes according to Claim 10, characterised in that the C₁- to C₆-alkylene radicals are methylene, ethylene, trimethylene or propylene, preferably methylene, and the phenyl-substituted alkylene radicals are phenylethylene or 1-methyl-1-phenylethylene.

12. Polycarbosilanes according to Claim 1, characterised in that the cycloalkylene radicals are cyclopentylene or cyclohexylene.

13. Polycarbosilanes according to Claim 1, characterised in that the fluorine content is 0.1 to 48 % by weight, preferably 1 to 48 % by weight.

14. Polycarbosilanes according to Claim 1, characterised in that the sum of the structural units from I and II lies between 10 and 500, preferably between 30 and 150.

15. Polycarbosilanes according to Claim 1, characterised in that they have mean molecular weights in the range from 750 to 300,000 g/mol.

16. Polycarbosilanes according to Claim 1, characterised in that they have branching groups of the general formulae III and/or IV 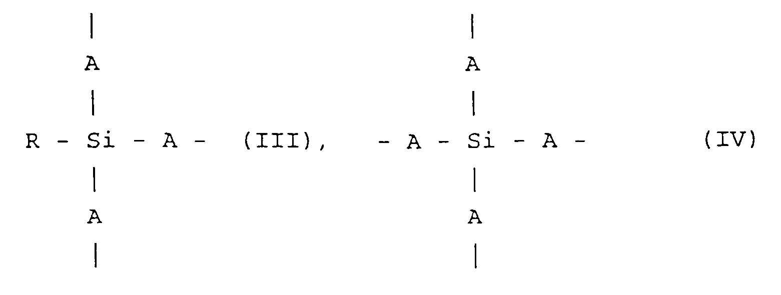 wherein
A has the above meaning and
R has the meaning halogen, alkyl, cycloalkyl, arylalkyl or aryl.

17. Polycarbosilanes according to Claim 1, characterised in that they have halogen, alkyl, cycloalkyl, arylalkyl, aryl, alkoxyl or hydroxyl groups as terminal groups.

18. Process for the preparation of fluorine-containing polycarbosilanes according to Claim 1, characterised in that
polycarbosilanes which contain structural units of the general formula V 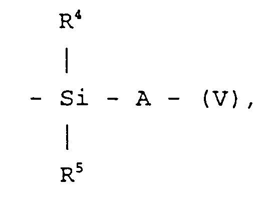 wherein
R⁴ stands for alkyl, cycloalkyl, arylalkyl or aryl, where R⁴ may also have different meanings in different units of one and the same polycarbosilane, and R⁵ stands for aryl, where R⁵ may also stand for different aryl radicals in different units of one and the same polycarbosilane,
are reacted under a protective gas atmosphere in an inert organic solvent with water largely excluded,
with at least one halogenating reagent under polar or ionic reaction conditions, optionally in the presence of a Lewis acid, in a manner such that the aryl substituents contained in the structural units of the general formula V are partially or completely replaced by halogen atoms, and
thereafter the halogen atoms introduced into the polycarbosilane are replaced under polar or ionic reaction conditions completely or partially by fluorine atoms.

19. Process for the preparation of fluorinated polycarbosilanes according to Claim 1, characterised in that polycarbosilanes which contain structural units of the general formula Ia or of the general formulae Ia and IIa 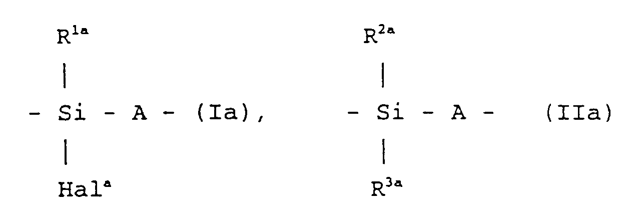 wherein
A has the above meaning, R^{2a} and R^{3a} have the meanings specified for R² and R³, and wherein
R^{1a} stands for chlorine, bromine, alkyl, cycloalkyl, arylalkyl or aryl, where R^{1a} may also have different meanings in different units of one and the same polycarbosilane, and wherein
Hal^{a} stands for chlorine or bromine, where Hal^{a} may also have different meanings in different units of one and the same polycarbosilane,
is reacted with a fluorinating reagent under polar or ionic reaction conditions as in the process according to Claim 18, in a manner such that the chlorine,
bromine and optionally aryl substituents contained in the polycarbosilane are replaced completely or partially by fluorine atoms.

## Revendications

1. Polycarbosilanes fluorés à base de motifs structuraux ayant les formules générales I ou I et II : 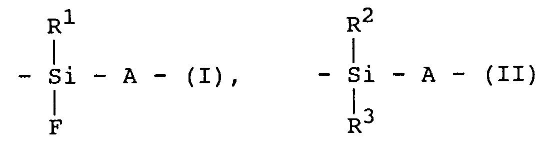 dans lesquelles :
R¹ est un halogène ou un radical alkyle, cycloalkyle, arylalkyle ou aryle, R1, dans les différents motifs d'un seul et même polycarbosilane, pouvant aussi avoir différentes significations,
R² et R³, indépendamment l'un de l'autre, représentent des radicaux alkyle, cycloalkyle, arylalkyle ou aryle, R² ou R³, dans les différents motifs d'un seul et même polycarbosilane, pouvant aussi avoir différentes significations,
A représente des radicaux alkylène ou cycloalkylène à chaîne droite ou ramifiée, qui peuvent encore être éventuellement substitués par des substituants phényle, les radicaux A, dans les différents motifs d'un seul et même polycarbosilane, pouvant aussi avoir différentes significations.

2. Polycarbosilanes selon la revendication 1, caractérisés en ce que, dans les éléments structuraux de formule générale I, R¹ est le fluor, le chlore ou le brome.

3. Polycarbosilanes selon la revendication 1, caractérisés en ce que, dans les éléments structuraux de formule générale I, R¹ est un radical alkyle, cycloalkyle, arylalkyle ou aryle.

4. Polycarbosilanes selon la revendication 1, caractérisés en ce que, dans les éléments structuraux de formule générale I, R¹ est le fluor.

5. Polycarbosilanes selon l'une des revendications 1 à 4, caractérisés en ce que, dans les motifs structuraux de formule générale II, R² et R³, indépendamment l'un de l'autre, représentent des radicaux alkyle, cycloalkyle ou arylalkyle.

6. Polycarbosilanes selon l'une des revendications 1 à 5, caractérisés en ce que A, dans tous les motifs structuraux de formules générales I et II du polycarbosilane, n'a qu'une seule et même signification.

7. Polycarbosilanes selon l'une des revendications 1 à 6, caractérisés en ce que chacun des substituants R² et R³, dans l'ensemble des motifs structuraux de formule II du polycarbosilane, n'a qu'une seule et même signification.

8. Polycarbosilanes selon l'une des revendications 1 à 7, caractérisés en ce que, dans tous les motifs structuraux de formule générale I, le substituant R¹ n'a qu'une seule et même signification.

9. Polycarbosilanes selon la revendication 1, caractérisés en ce que R² et R³, indépèndamment l'un de l'autre, représentent les radicaux méthyle, éthyle, propyle, butyle ou aryle, par exemple phényle.

10. Polycarbosilanes selon la revendication 1, caractérisés en ce que A représente des radicaux alkylène en C₁-C₆ à chaîne droite ou ramifiée ou des radicaux alkylène à substitution phényle, ayant 8 ou 9 atomes de carbone.

11. Polycarbosilanes selon la revendication 10, caractérisés en ce que les radicaux alkylène en C₁-C₆ sont les radicaux méthylène, éthylène, triméthylène ou propylène, de préférence méthylène, et les radicaux alkylène à substitution phényle sont les radicaux phényléthylène ou 1-méthyl-1-phényléthylène.

12. Polycarbosilanes selon la revendication 1, caractérisés en ce que les radicaux cycloalkylène sont les radicaux cyclopentylène ou cyclohexylène.

13. Polycarbosilanes selon la revendication 1, caractérisés en ce que la teneur en fluor est de 0,1 à 48 % et de préférence de 1 à 48 % en poids.

14. Polycarbosilanes selon la revendication 1, caractérisés en ce que le nombre total des motifs structuraux I et II est compris entre 10 et 500 et de préférence entre 30 et 150.

15. Polycarbosilanes selon la revendication 1, caractérisés en ce que leur masse moléculaire moyenne est comprise entre 750 et 300.000 g/mol.

16. Polycarbosilanes selon la revendication 1, caractérisés en ce qu'ils ont des groupes ramifiés de formules générales III et/ou IV 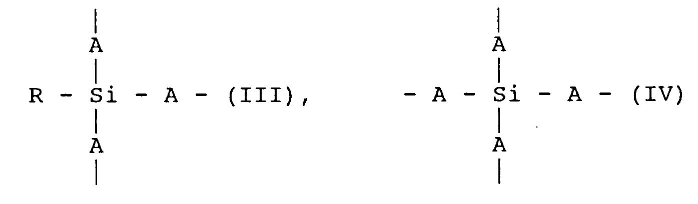 dans lesquelles :
A a les significations données ci-dessus, et
R représente un halogène ou un radical alkyle, cycloalkyle, arylalkyle ou aryle.

17. Polycarbosilanes selon la revendication 1, caractérisés en ce qu'ils comportent comme groupes terminaux des radicaux halogéno, alkyle, cycloalkyle, arylalkyle, aryle, alcoxyle ou hydroxyle.

18. Procédé pour préparer des polycarbosilanes fluorés selon la revendication 1, caractérisé en ce qu'on fait réagir des polycarbosilanes comportant des motifs structuraux de formule générale V : 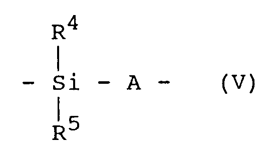 dans laquelle :
R⁴ représente un radical alkyle, cycloalkyle, arylalkyle ou aryle, R⁴, dans les différents motifs d'un seul et même carbosilane, pouvant aussi avoir différentes significations, et R⁵ est un radical aryle, R⁵, dans les différents motifs d'un seul et même polycarbosilane, pouvant aussi représenter différents radicaux aryle, sous atmosphère d'un gaz protecteur, dans un solvant organique inerte, essentiellement en l'absence d'eau, avec au moins un réactif d'halogénation, dans des conditions de réaction polaires ou ioniques,
éventuellement en présence d'un acide de Lewis, de façon que les substituants aryle contenus dans les motifs structuraux de formule générale V soient, en totalité ou en partie, remplacés par des atomes d'halogène,
puis on remplace en totalité ou en partie par des atomes de fluor les atomes d'halogène introduits dans le polycarbosilane, dans des conditions de réaction polaires ou ioniques.

19. Procédé pour préparer des polycarbosilanes fluorés selon la revendication 1, caractérisé en ce qu'on fait réagir des polycarbosilanes contenant des motifs structuraux de formule générale Ia ou ayant les formules générales Ia et IIa : 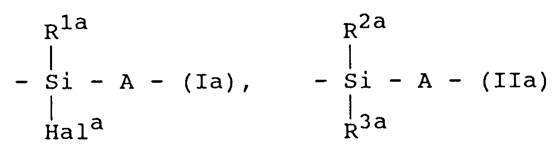 dans lesquelles :
A a les significations données ci-dessus, R^{2a} et R^{3a} ont les significations données pour R² et R³, et où
R^{1a} est le chlore, le brome ou un radical alkyle, cycloalkyle, arylalkyle ou aryle, R^{1a}, dans les différents motifs d'un seul et même polycarbosilane, pouvant aussi avoir différentes significations, et où Hal^{a} est le chlore ou le brome, Hal^{a}, dans les différents motifs d'un seul et même polycarbosilane, pouvant aussi avoir différentes significations,
avec un réactif de fluoration, dans les mêmes conditions polaires ou ioniques que dans le procédé selon la revendication 18, de façon que les substituants chloro, bromo et éventuellement aryle contenus dans le polycarbosilane soient, en totalité ou en partie, remplacés par des atomes de fluor.
